# EUROPÄISCHE PATENTSCHRIFT

(11) **EP 0 727 051 B1**
(45) Veröffentlichungstag und Bekanntmachung des Hinweises auf die Patenterteilung: **26.08.1998**
(21) Anmeldenummer: 94931572.5
(22) Anmeldetag: 07.11.1994
(51) Int. Cl.: G01S 13/34

(54) **RADARGERÄT UND VERFAHREN ZU SEINEM BETRIEB**
RADAR DEVICE AND PROCESS FOR OPERATING IT
RADAR ET PROCEDE PERMETTANT DE LE FAIRE FONCTIONNER

(30) Priorität: 06.11.1993 GB 9322924
(43) Veröffentlichungstag der Anmeldung: 21.08.1996
(73) Patentinhaber: SIEMENS AKTIENGESELLSCHAFT, 80333 München (DE)
(72) Erfinder: RICHARDSON, Michael Richard, Romsey, Hampshire SO51 8UX (GB)
(86) Internationale Anmeldenummer: EP9403646
(87) Internationale Veröffentlichungsnummer: WO9512824

(56) Entgegenhaltungen:
- DE-A- 4 040 572
- GB-A- 2 172 461

## Beschreibung

Die vorliegende Erfindung bezieht sich auf ein Radargerät gemäß Oberbegriff von Anspruch 1 sowie ein Verfahren zu dessen Betrieb gemäß Oberbegriff von Anspruch 4, das aus der GB-A-2 172 461 bekannt ist.

Die Erfindung dient insbesondere zur Kollisionswarnung und Fahrsteuerung von Fahrzeugen.

Das für Radarbetrieb zugewiesene Frequenzband liegt bei 77GHz; infolge der vorgegebenen (technologischen und gesetzlichen) Randbedingungen für den Sender ergibt sich als einzige preiswerte Möglichkeit die Verwendung einer Frequenzmodulation einer stetig gesendeten Trägerwelle (FMCW-Radar).

Bei dieser Modulation wird die Sendefrequenz gewöhnlich innerhalb eines engen Frequenzbandes von typischerweise 200MHz - Frequenzhub - mit Hilfe eines sägezahn- oder dreieckförmigen Modulationssignals verändert. Ein Modulationszyklus besteht somit aus einer aufsteigenden und einer absteigenden Modulationsphase. Ein Empfänger mischt das so modulierte Sendesignal mit Echosignalen, die von Zielobjekten reflektiert werden und mischt diese zur Bildung eines Mischsignals, das je Modulationsphase und Zielobjekt eine für dieses Zielobjekt charakteristische Frequenz enthält, die im folgenden als Zielobjektfrequenz bezeichnet wird. Aus den Objektfrequenzen der beiden Modulationsphasen eines Modulationszyklus können dann Abstand und Relativgeschwindigkeit gegenüber dem Zielobjekt berechnet werden. Die den Abstand kennzeichnende Frequenz ist dabei proportional der Modulationsrate (Frequenzhub pro Zeiteinheit). Bei einem bewegten Zielobjekt ist die Objektfrequenz zusätzlich abhängig vom Dopplereffekt und damit proportional zur Geschwindigkeit des Zielobjektes und der Sendefrequenz.

Üblicherweise wird die Modulationsrate möglichst hoch gewählt, um den auf den Dopplereffekt zurückgehenden Anteil - Relativgeschwindigkeitsanteil fv - der Objektfrequenz möglichst klein zu halten im Vergleich zum Entfernungsanteil fr innerhalb des in Betracht kommenden Erfassungsbereiches.

Diese beiden Komponenten ergeben sich aus den Objektfrequenzen während der beiden Modulationsphasen wie folgt: In der ersten Modulationsphase mit steigender Frequenz ist die Objektfrequenz gegeben durch fu = |fv-fr| und in der zweiten Modulationsphase mit abnehmender Frequenz durch fd = |fv + fr|. Da fr bei sehr hoher Modulationsrate sehr groß gegen fv wird, ist die Zuordnung der zum selben Zielobjekt gehörenden Objektfrequenzen innerhalb der beiden Modulationsphasen und damit die darauf gestützte Berechnung von Abstand und Relativgeschwindigkeit einfach, selbst wenn mehrere Zielobjekte angetroffen werden.

Grundsätzlich muß das Mischsignal mit einer Rate abgetastet werden, die größer ist als die sich aus dem Nyquist-Theorem ergebende Frequenz im Falle des größten Erfassungsbereiches. Daher erfordern Systeme mit möglichst hoher Modulationsrate sehr schnelle und daher kostspielige Analog/Digital-Wandler in Verbindung mit entsprechend schnellen Prozessoren und Speichersystemen für die Zwischenspeicherung der Abtastwerte zwecks weiterer Analyse. Für ein kostengünstiges Radarsystem, wie beispielsweise für die Anwendung im Automobil, ist daher ein derartiges System nicht anwendbar.

Übliche Digialbausteine und Prozessoren können zwar verwendet werden, wenn die Modulationsrate entsprechend reduziert wird; das hätte aber zur Folge, daß in manchen Fällen (schnelle Zielobjekte in kurzer Entfernung) der Wert von fd größer als der von fr wird, woraus sich Mehrdeutigkeiten bei der Zuordnung der Objektfrequenzen in den beiden Modulationsphasen entstehen, sobald mehrere Zielobjekte vorhanden sind. Außerdem wird die Meßgenauigkeit und die Auflösung des Systems infolge der schlechteren Trennung benachbarter Objektfrequenzen und infolge der geringeren Anzahl von Abtastwerten innerhalb einer Modulationsphase beeinträchtigt.

Eine weitere Beschränkung ergibt sich aus der niedrigen Sendeleistung mit der Folge, daß die Echosignale sehr nahe dem Systemrauschen sind.

Der Erfindung liegt daher die Aufgabe zugrunde, ein einfaches und damit kostengünstiges Radarsystem zu schaffen, das die vorgenannten Probleme vermeidet.

Bei der Erfindung wird das Mischsignal aus Sende- und Empfangssignal nach Digitalisierung einer schnellen Fouriertransformation (FFT) unterworfen und werden in dem so erhaltenen Frequenzspektrum die Maxima ermittelt, welche die Objektfrequenzen bestimmen. Nach korrekter Zuordnung jeder Objektfrequenz in den zu den beiden Modulationsphasen gehörenden Spektren zum zugehörigen Zielobjekt können dann Abstand und Relativgeschwindigkeit für jedes Zielobjekt aus Summe und Differenz der Objektfrequenzen (Frequenzpaar) berechnet werden.

Die in den Ansprüchen 1 und 4 gekennzeichnete Erfindung beruht auf der Überlegung, daß die Zuordnung der zum selben Zielobjekt gehörenden Objektfrequenzen in den beiden Modulationsphasen abhängig von der Verschiebung dieser Objektfrequenzen in aufeinanderfolgenden Meßzyklen möglich ist. Ausgehend von der durch die Anwendung vorgegeben Minimalzeit zur Detektierung eines Zielobjektes ergeben sich dabei verhältnismäßig lange Modulationszyklen und damit niedrige Modulationsraten, die den Einsatz einfacher und preiswerter Digitalbausteine ermöglichen.

Bei der Erfindung werden somit die Objektfrequenzen desselben Zielobjektes in jedem Meßzyklus gespeichert und über einige, beispielsweise 3 bis 5 Meßzyklen verfolgt. Zur Ermittlung dieser Objektfrequenzen wird dabei eine Fouriertransformation durchgeführt und das Leistungsspektrum berechnet.

Die Erfindung wird anhand der Figuren näher erläutert; es zeigen:

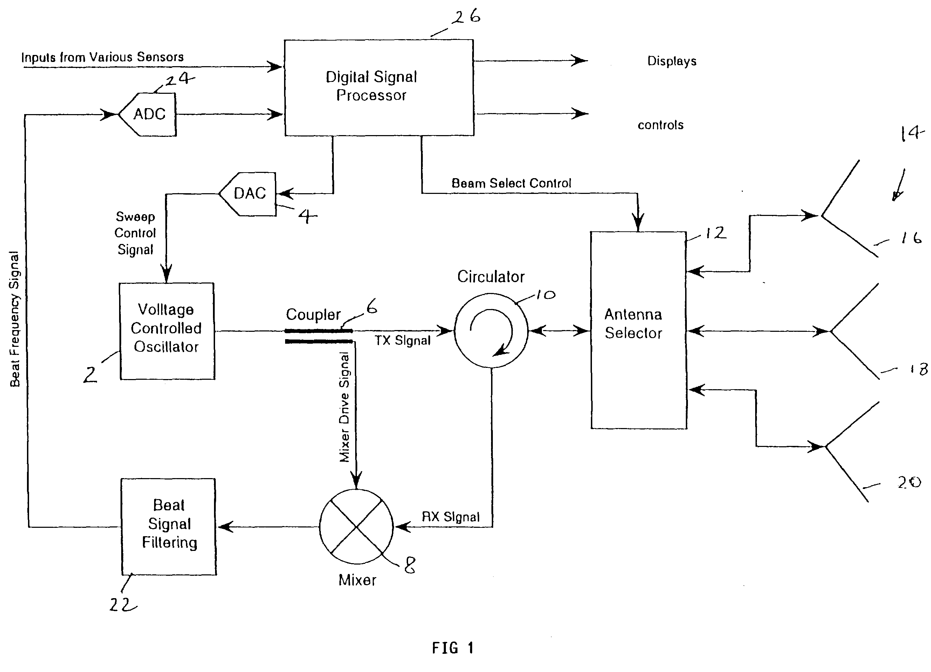

- Figur 1: das Blockdiagramm eines Ausführungsbeispieles eines erfindungsgemäßen Radargerätes, und
- Figur 2: einen typischen Verlauf eines Meßzyklus.

Das Radargerät arbeitet mit einem spannungsgesteuertem Oszillator 2, der ausgangsseitig über einen Richtkoppler 6 und einen Zirkulator 10 an einen Antennenselektor 12 angeschlossen ist, der seinerseits mit drei Radarantennen 16, 18 und 20 verbunden ist. Ein Mischer 8 erhält die von Zielobjekten reflektierten Echosignale einerseits und einen Teil des Sendesignals von dem Richtkoppler 6 und liefert ein Mischsignal, das über ein Anlalogfilter 22 und einen Analog/Digital-Wandler 24 einem digitalen Signalprozessor 26 zugeführt wird. Dieser bestimmt den Verlauf des Modulationssignals, das über einen Digital/Analog-Wandler 4 den Oszillator 2 steuert. Der Prozessor 26 gibt an den Digital/Analogwandler 4, der mit einem Tiefpaßfilter ausgestattet ist, eine Datenfolge, aus der ein analoges Modulationssignal erzeugt wird.

Der Prozessor 26 steuert ferner die Auswahl der Antennen über den Selektor 12 sowie Funktionen innerhalb des mit dem Gerät ausgerüsteten Fahrzeugs wie beispielsweise Warnanzeigen, Eingriffe in die Motorsteuerung und/oder Bremsen zur Beeinflussung der Fahrzeuggeschwindigkeit; hierzu erhält der Prozessor 26 von dem Fahrzeug Sensorsignale beispielsweise über Geschwindigkeit und Lenkwinkel des eigenen Fahrzeuges.

Der Oszillator 2 erzeugt ein Radarsignal mit einer Frequenz von etwa 77GHz, die durch das Modulationssignal (Frequenzhub zwischen 100 und 300MHz) verändert wird. Das Modulationssignal ist hier dreieckförmig und weist die gewünschte niedrige Modulationsrate auf, beispielsweise 50MHz/1ms.

Der Mischer 8 multipliziert das von den Antennen über den Selektor und den Zirkulator kommende Echosignal mit einem über den Richtkoppler 6 abgeleiteten Teil des Sendesignals und erzeugt ein Mischsignal, in dem Objektfrequenzen für jedes Zielobjekt enthalten sind, die von dessen Abstand und Relativgeschwindigkeit abhängig sind. Aus diesem Mischsignal entfernt ein Filter 22 unerwünschte Hochfrequenz- und Gleichstrom-Komponenten und maximiert das Signal/Rausch-Verhältnis.

Im Filter 22 ist ein weiteres, nicht dargestelltes Filter (R⁴-Filter) enthalten oder anschließend an dieses vor dem Analog/Digital-Wandler 22 eingesetzt, um die Ausbreitungseffekte - Verluste durch Strahlaufweitung, die mit dem Faktor R⁴ des Abstandes R zunehmen, wenigstens teilweise zu kompensieren und damit den Dynamikumfang zu reduzieren, um die Anforderungen an den nachfolgenden A/D-Wandler 24 zu verringern. Das R⁴-Filter arbeitet im wesentlichen als frequenzabhängiger Tiefpaß.

Der Prozessor 26 steuert die Funktion der Radarkomponenten sowie die Abtastung/Digitalisierng des Mischsignals und ermittelt aus den gewonnenen Abtastwerten eventuell vorhandene Zielobjekte nach Abstand und Relativgeschwindigkeit.

Jeder Meßzyklus kann programmsgesteuert mit einer oder mehreren Antennen realisiert werden, wobei mehrere aufeinanderfolgende Meßzyklen von derselben oder von abwechselnden Antennen ausgeführt werden können.

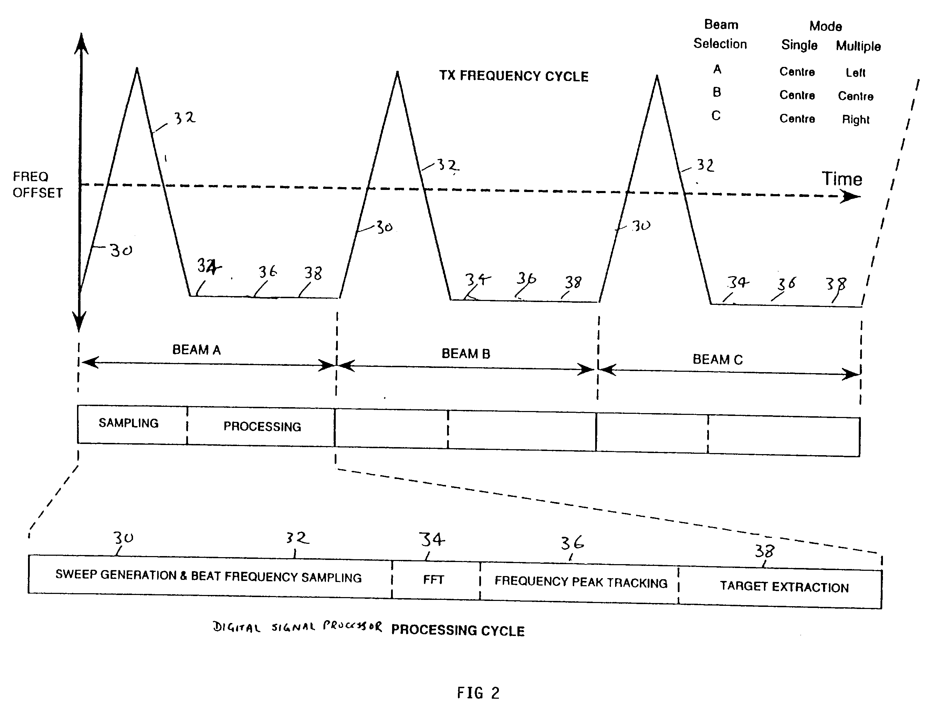

In Figur 2 sind drei gleichartige Meßzyklen mit dem zugehörigen Verlauf des Modulationssignals dargestellt. Jeder Zyklus besteht aus einer ersten Modulationsphase 30 mit aufsteigender Frequenz, an die sich eine zweite Modulationsphase 32 mit fallender Frequenz anschließt; diese ist gefolgt von einer Pause 34,36,38.

In der ersten Modulationsphase 30 sendet der Prozessor 26 die den Verlauf des Modulationssignals bestimmenden Daten und liest und speichert zugleich die vom Analog/Digital-Wandler 24 gelieferten Abtastwerte. Die Modulationszeit zum Durchlaufen des gesamten Modulationshubes von der minimalen zur maximalen Frequenz und umgekehrt ist etwas länger als die Datenerfassungszeit; dadurch wird es möglich, mit der Datenerfassung erst nach Abklingen von Einschwingeffekten aufgrund der Filterung des Mischsignals zu beginnen.

Modulationszeit und Frequenzhub sind in der ersten und der zweiten Modulationsphase gleich.

In dem Teil 34 der Pause steuert der Prozessor 26 die Ausführung von zwei schnellen Fourier-Transformationen (FFT) für die in den beiden vorausgegangenen Modulationsphasen (aufwärts und abwärts) aufgenommenen Abtastwerte, um die Objektfrequenzen fu und fd zu ermitteln und einander zuzuordnen. Da sich die Objektfrequenzen von einer Meßphase zur nächsten nur um ein bestimmtes Maß verändern können, wird eine Zuordnung erleichtert.

Die Abstands- und Geschwindigkeitsberechnungen werden dann dazu benutzt, die zum selben Zielobjekt gehörenden Objektfrequenzen in den beiden Modulationsphasen zu erkennen und zu einem Frequenzpaar zu kombinieren, wodurch sich die Fehlzuordnung drastisch reduzieren läßt, selbst wenn eine hohe Zahl von Zielobjekten zu unterscheiden ist, auch bei hohem Rauschpegel.

Eine Quantifizierung der korrekten Zuordnung von Objektfrequenzen erhält man durch die Berechnung eines Fehlermaßes, das eine Funktion der Größe des Fehlers zwischen den Abstands- und Geschwindigkeitswerten ist, die man einerseits durch Addition und Subtraktion der Objektfrequenzen in den beiden Modulationsphasen und andererseits als Ergebnis einer Auswertung von Objektbahnen (siehe später) erhält. Nach der Berechnung des Fehlermaßes werden in einem einfachen Suchprozeß Paare von Objektfrequenzen ausgewählt, für die sich das jeweils niedrigste Fehlermaß ergibt; diese gehören mit größter Wahrscheinlichkeit zum selben Zielobjekt und aus diesen Frequenzen werden schließlich Entfernung und Geschwindigkeit in bekannter Weise exakt berechnet.

In dem Abschnitt 36 der Pause verwendet dann der Prozessor 26 die gefundenen Objektfrequenzen zur Aktualisierung je einer Objektbahn für die aufsteigenden und absteigenden Modulationsphasen jedes Zielobjekts, die aus in vorhergehenden Meßzyklen ermittelten Objektfrequenzen besteht, und zur Ableitung darauf gestützter Schätzwerte für die folgende Meßphase. Bei der nächsten Fouriertransformation werden bevorzugt im Bereich der ermittelten Schätzwerte - des in Zellen eingeteilten Frequenzbereichs der FFT (FFT-Zellen) - die nächsten Objektfrequenzen gesucht.

Im Abschnitt 38 der Pause werden schließlich aufgrund des Verlaufs der Objektbahnen (Schätzwerte aus der vorhergehenden Meßphase und ihnen zugeordnete, in der darauffolgenden Meßphase ermittelte Objektfrequenzen) in den beiden Modulationsphasen die zum selben Zielobjekt gehörenden Objektfrequenzen bestimmt, die ein Frequenzpaar bilden.

Durch die Aktualisierung der Objektbahnen in jedem Meßzyklus wird die Frequenzauflösung und damit die Meßgenauigkeit des Systems erhöht, was schließlich eine unzweideutige Berechnung von Abstand und Geschwindigkeit für jede Objektfrequenz in den beiden Modulationsphasen ermöglicht. Das Verfahren erlaubt auch die Verfolgung von verschwindenden Zielobjekten durch Bildung neuer Schätzwerte aus vorhergehenden, nicht realisierten Schätzwerten, d.h., aus Schätzwerten, denen im nächsten Meßzyklus keine Objektfrequenz zugeordnet werden kann, die Eliminierung von Fehlalarm aufgrund von Rauschen sowie die Lösung von Problemen, die durch die Umkehr der Bewegungsrichtung eines Maximums im Spektrum hervorgerufen werden (zu große Abweichung von Schätzwerten).

Für jede Modulationsphase wird eine FFT durchgeführt und das Leistungsspektrum berechnet. Darauf basierend wird jede früher gespeicherte Objektbahn aktualisiert, indem in dem Leistungsspektrum nach einem Maximum innerhalb eines Bereiches von FFT-Zellen in der Umgebung einer vorausberechneten Objektfrequenz gesucht wird. Wenn dort ein über dem Rauschen liegendes Maximum gefunden wird, wird damit die spezielle Objektbahn aktualisiert. Wenn kein Maximum gefunden wird, wird ein solches durch einen berechneten Schätzwert ersetzt.

Erscheint das Zielobjekt auch nach einer gegebenen Anzahl von Meßzyklen nicht mehr, wird die Objektbahn aufgegeben. Nachdem alle bereits bestehenden Objektbahnen aktualisiert wurden, werden die Spektren nach noch nicht zugeordneten Objektfrequenzen abgesucht, die möglicherweise neu entdeckten Zielobjekten zuzuordnen sind. Werden solche gefunden, dann wird für jede Objektfrequenz eine Objektbahn mit einem Vorausberechnungswert angelegt. Erst wenn diese Objektfrequenz in mehreren Meßzyklen gefunden wurde, wird es als bestätigtes Ziel geführt und für den Zuordnungsprozeß von Objektfrequenzen in den beiden Modulationsphasen freigegeben.

Die Berechnung der Objektfrequenz und ihrer Änderungsrate wird dann für jede bestätigte Objektbahn von einer Optimalkurve erhalten, die an die aus früheren Meßzyklen vorhandenen Punkte (Objektfrequenzen) dieser Objektbahn geschmiegt wird (mathematisches Optimierungsverfahren, Interpolation).

Die Objektfrequenz für jedes Zielobjekt enthält pro Modulationsrichtung (auf oder ab) zwei Komponenten fr und fv, die von Abstand r und Relativgeschwindigkeit v abhängig sind. Für ein Zielobjekt mit konstanter Geschwindigkeit ist jedoch die Änderung der Objektfrequenz nur noch eine Funktion der Relativgeschwindigkeit und ermöglicht so die Berechnung eines Schätzwertes fve der geschwindigkeitsabhängigen Komponente fv (bei genügend kurzer Dauer eines Meßzyklus kann jedes Zielobjekt als Objekt mit konstanter Geschwindigkeit angesehen werden), indem beispielsweise der Meßwert fv aus dem vorherigen Meßzyklus als Schätzwert fve bestimmt wird und für einen gültigen Meßwert im nächsten Meßzyklus demgegenüber nur eine Veränderung um einen Wert zugelassen wird, welcher einer physikalisch maximal möglichen Änderung entspricht. Soweit sich hierbei Werte ergeben, die physikalisch unmöglich sind, werden diese verworfen. Damit ist es möglich, immer eindeutige Werte für fr und fv zu erhalten.

Die Fähigkeit, Zweideutigkeiten bei der Ermittlung von fr und fv aufzulösen, ist eine der Schlüsseleigenschaften, die die Identifikation von Zielobjekten mit einem System niedriger Modulationsrate möglich macht. Die Abschätzung wird nun im folgenden erläutert:

das Verfahren basiert darauf, nach Bildung des zuvor ermittelten Schätzwertes fve die Werte fr und fv entsprechend der gefundenen Größe fc einer im nächsten Meßzyklus detektierten Objektfrequenz fu bzw. fd für jede Modulationsphase zu berechnen.

Wenn fc > fve ist, wird für beide Modulationsphasen fv = fve gesetzt. Der Wert für fr ist dagegen von der Modulationsrichtung abhängig, und zwar
für Aufwärtsmodulation fr = fc + fve und
für Abwärtsmodulation fr = fc - fve.

Im Falle fc < fve ergibt sich eine komplexere Berechnung:

fv = |fve| während der Aufwärtsmodulation und gleich minus dem absoluten Wert von fve in der Abwärtsmodulation. Der Wert von fr ist ebenfalls abhängig von der Modulationsrichtung und zusätzlich vom Vorzeichen von fve:

Wenn fve > 0 ist, gilt:
für Aufwärtsmodulation fr = |fve| + fc und
für Abwärtsmodulation fr = |fve| - fc .

Ist fve < 0, gilt:
für Aufwärtsmodulation fr = |fve| - fc und
für Abwärtsmodulation fr = |fve| + fc.

Die Zuordnung der Objektfrequenzen zum selben Zielobjekt in den beiden Modulationsphasen wird dann gestützt auf die Berechnungen von fr und fv. Grundsätzlich liefert jedes Paar einander zugeordneter Objektfrequenzen fu und fd zwei Abstands- und zwei Geschwindigkeitswerte, nämlich die Summe und die Differenz der Objektfrequenzen in den beiden Modulationsphasen. Bei korrekter Zuordnung der beiden Objektfrequenzen kann die Summe den Abstand bedeuten und die Differenz die Relativgeschwindigkeit bedeuten oder umgekehrt, je nach der relativen Größe von fr und fv. Bei einer falschen Zuordnung sind dagegen beide Lösungen falsch.

Wie bei der Aktualisierung der Objektbahnen werden frühere Zuordnungen von Objektfrequenzen zueinander solange aufrecht erhalten, wie ihr Fehlerwert klein ist. Es wurde gefunden, daß diese Fehlerwerte bei einer falschen Zuordnung sehr schnell ansteigen. Dadurch erhält der Prozeß ein hohes Maß an Sicherheit gegen Falschzucrdnungen und gegenüber Objektbahnen, die durch Rauschen erzeugt werden; letzteres erlaubt es wiederum, den Grenzwert für das Systemrauschen sehr niedrig anzusetzen, was gleichbedeutend mit einer hohen Detektionsempfindlichkeit ist.

Gemäß einer einfachen Weiterbildung des beschriebenen Prozesses ist es auch möglich, Zielobjekte mit Beschleunigung zu identifizieren. In diesem Fall liefert die Auswertung der Objektbahnen falsche Werte, wobei der Fehler dem Beschleunigungsvektor proportional ist. Daraus resultiert ein vergrößerter Fehlerwert bei der Zuordnung der Objektfrequenzen zu einem Frequenzpaar, sofern keine Kompensation vorgenommen wird. Gemäß Weiterbildung werden nun die Beschleunigungen berechnet, die man zur Reduzierung der Fehler von Abstand und Geschwindigkeit benötigt, die einerseits von den Objektbahnen abgeleitet und andererseits von den Objektfrequenzen in den beiden Modulationsphasen berechnet wurden; aus den so gewonnenen vier Beschleunigungswerten wird ein Mittelwert berechnet, der einer Neuberechnung des Fehlerwertes zugrunde gelegt wird. Bei korrekter Zuordnung von Objektfrequenzen konvergiert dieser Berechnungsprozeß und führt zu einem kleinen Fehlerwert im Gegensatz zu einem großen Fehlerwert bei fehlerhafter Zuordnung.

## Patentansprüche

1. Radargerät mit mindestens einer Antenne (16,18,20) zum Senden und Empfangen von Radarsignalen, mit einem Signalgenerator (26) zur Speisung der Antenne (16,18,20), mit Misch- und Filtemitteln (8,22) zur Erzeugung eines Mischsignals, wobei der Signalprozessor (26) das Mischsignal und weitere Sensorsignale empfängt und die Frequenzen vom Maxima im Spektrum des Mischsignals getrennt nach aufsteigender und absteigender Modulationsphase (30,32) als Objektfrequenzen aufzeichnet und aus den Objektfrequenzen den Abstand und die Relativgeschwindigkeit eines Zielobjektes berechnet, **dadurch gekennzeichnet,**
- daß über einige Meßzyklen die Objektfrequenzen eines Zielobjektes getrennt nach aufsteigenden und absteigenden Modulationsphasen gespeichert werden,
- daß aus den gespeicherten Objektfrequenzen Objektbahnen gebildet werden, die den bisherigen zeitlichen Verlauf dieser Objektfrequenzen beschreiben,
- daß aus dem bisherigen Verlauf der Objektbahnen Schätzwerte (fve) für die im nächsten Meßzyklus zu erwartenden Objektfrequenzen (fc) gebildet werden,
- daß nach Berechnung eines Fehlermaßes aus den Objektfrequenzen (fc) und aus den von den Objektbahnen erhaltenen Schätzwerten (fve) die Objektfrequenz-Paare mit dem jeweils geringsten Fehlermaß einander zugeordnet werden, und daß aus diesen Paaren die richtigen Werte für Entfernung (r) und Relativgeschwindigkeit (v) des Zielobjektes berechnet werden.

2. Radargerät nach Anspruch 1, dadurch gekennzeichnet, daß mit einem spannungsgesteuerten Oszillator (2), der über einen Richtkoppler (6) und einen Zirkulator (10) mit der Antenne verbunden ist, mit einem Mischer (8), der einen Teil des Sendesignals mit den empfangenen Echosignalen zu einem Mischsignal mischt, das Differenzfrequenzen enthält, aus denen der Abstand (r) und die Relativgeschwindigkeit (v) wenigstens eines Zielobjektes ermittelbar sind, daß als Signalprozessor ein digitaler Signalprozessor (26) angeordnet ist, der über einen Digital/ Analog-Wandler (24) den Oszillator (2) steuert, der Sensorsignale und über einen Analog/ Digital-Wandler (24) Abtastwerte des Mischsignals empfängt und die Frequenzen von Maxima im Spektrum des Mischsignals getrennt nach aufsteigender und abfallender Modulationsphase ermittelt, aufzeichnet und daraus Schätzwerte für Objektfrequenzen des nächsten Meßzyklus berechnet.

3. Radargerät nach Anspruch 1, dadurch gekennzeichnet, daß den Mischer (8) ein Analogfilter (22) nachgeschaltet ist, das unerwünschte Hochfrequenz-Gleichstrom-Komponenten aus dem Mischsignal entfernt und das Signal/Rausch-Verhältnis optimiert, daß ein im wesentlichen als frequenzabhängiger Tiefpaß arbeitendes Filter, insbesondere ein R⁴-Filter, vorgesehen ist, welches im Analogfilter (22) enthalten oder zwischen dieses und den Eingang des Analog/Digital-Wandlers (24) geschaltet ist.

4. Verfahren zum Betreiben eines Radargerätes, das wenigstens eine Antenne zum Senden und Empfangen aufweist, das einen Signalgenerator (26) aufweist, der die Antenne (16,18,20) speist, das Misch- und Filtermittel (8,22) aufweist, die ein Mischsignal erzeugen und das Mischsignal dem Signalprozessor (26) zuführen, wobei in aufeinanderfolgenden Meßzyklen, die aus einer aufsteigenden (30) und einer absteigenden (32) Modulationsphase und einer anschließenden Auswertepause (34,36,38) bestehen, im digitalen Signalprozessor (26), die in jedem Modulationszyklus während der beiden Modulationsphasen erfaßten und aufgezeichneten digitalen Abtastwerte der Mischsignale getrennt einer schnellen Fouriertransformation (FFT) unterzogen werden, um aus den in den Spektren enthaltenen Maxima die Objektfrequenzen (fu,fd) zu bestimmen, dadurch gekennzeichnet,
daß aus den über einige Meßzyklen gespeicherten Objektfrequenzen für ein Zielobjekt, nach aufsteigenden und absteigenden Modulationsphasen getrennt, Objektbahnen gebildet werden, die den bisherigen zeitlichen Verlauf der Objektfrequenzen beschreiben,
daß aus dem bisherigen Verlauf der Objektbahnen Schätzwerte (fve) für die im nächsten Meßzyklus zu erwartenden Objektfrequenzen (fc) gebildet werden,
daß nach Berechnung eines Fehlermaßes aus den Objektfrequenzen (fc) und aus den von den Objektbahnen erhaltenen Schätzwerten (fve) die Objektfrequenz-Paare mit dem jeweils geringsten Fehlermaß einander zugeordnet werden, und daß aus diesen Paaren die richtigen Werte für Entfernung (r) und Relativgeschwindigkeit (v) des Zielobjektes berechnet werden.

5. Verfahren nach Anspruch 4, dadurch gekennzeichnet, daß die Erfassungszeit für die Abtastwerte der Mischsignale jeder Modulationsphase kürzer als die Dauer der Modulationsphase ist.

6. Verfahren nach Anspruch 4, dadurch gekennzeichnet, daß das Fehlermaß eine Funktion der Größe des Fehlers zwischen den Abstands- und Relativgeschwindigkeitswerten ist, die einerseits durch Addition und Subtraktion der Objektfrequenzen in den beiden Modulationsphasen eines Meßzyklus und andererseits als Ergebnis einer Auswertung der Objektbahnen erhalten werden.

7. Verfahren nach Anspruch 4,
**dadurch gekennzeichnet,**
daß zur Verfolgung verschwundener Zielobjekte neue Schätzwerte aus vorhergehenden Schätzwerten gebildet werden.

8. Verfahren nach Anspruch 4,
**dadurch gekennzeichnet,**
daß nach Aktualisierung, aller bereits bestehenden Objektbahnen für jedes noch nicht zugeordnete Maximum eines Meßzyklus eine neue Objektbahn mit einem Schätzwert angelegt wird, insbesondere, wenn der neue Meßwert im Bereich des Schätzwertes liegt.

9. Verfahren nach Anspruch 4,
**dadurch gekennzeichnet,**
daß jede neue Objektbahn erst nach einer vorgegebenen Zahl von Meßzyklen für den Zuordnungsprozeß von Objektfrequenzen der beiden Modulationsphasen freigegeben wird.

## Claims

1. Radar equipment having at least one antenna (16,18,20) for transmission and reception of radar signals, having a signal generator (26) for supplying the antenna (16,18,20), having mixing and filter means (8,22) for production of a mixed signal, the signal processor (26) receiving the mixed signal and further sensor signals, recording the frequencies of maxima in the spectrum of the mixed signal separately on the basis of rising and falling modulation phase (30,32) as object frequencies, and using the object frequencies to calculate the distance and the relative speed of a target object,
**characterized**
- in that the object frequencies of a target object are stored over a number of measurement cycles separately on the basis of rising and falling modulation phases,
- in that object tracks which describe the previous time response of the stored object frequencies are formed from said object frequencies,
- in that estimated values (fve) for the object frequencies (fc) to be expected in the next measurement cycle are formed from the previous response of the object tracks,
- in that, after calculation of an error from the object frequencies (fc) and from the estimated values (fve) obtained from the object tracks, the object frequency pairs which in each case have the lowest error are assigned to one another, and in that these pairs are used to calculate the correct values for the range (r) and the relative speed (v) of the target object.

2. Radar equipment according to Claim 1, having a voltage-controlled oscillator (2) which is connected via a directional coupler (6) and a circulator (10) to the antenna, having a mixer (8) which mixes part of the transmitted signal with the received echo signals to form a mixed signal which contains difference frequencies from which the distance (r) and relative speed (v) of at least one target object can be determined, characterized in that a digital signal processor (26) is arranged as the signal processor, which controls the oscillator (2) via a digital to analogue converter (24), receives sensor signals and, via an analogue to digital converter (24), samples of the mixed signal, determines and records the frequencies of maxima in the spectrum of the mixed signal separately on the basis of a rising and falling modulation phase, and calculates therefrom estimated values for object frequencies in the next measurement cycle.

3. Radar equipment according to Claim 1, characterized in that an analogue filter (22) is connected downstream of the mixer (8), which analogue filter (22) removes undesired radio-frequency/DC components from the mixed signal and optimizes the signal to noise ratio, in that a filter, in particular an R⁴ filter, is provided which operates essentially as a frequency-dependent low pass filter which is contained in the analogue filter (22) or is connected between said analogue filter (22) and the input of the analogue to digital converter (24).

4. Method for operation of a radar equipment which has at least one antenna for transmission and reception, has a signal generator (26) which supplies the antenna (16,18,20), has mixing and filter means (8,22) which produce a mixed signal and feed the mixed signal to the signal processor (26), those digital samples of the mixed signals which are detected and recorded in each modulation cycle during the two modulation phases being subjected separately to Fast Fourier transformation (FFT) in successive measurement cycles which comprise a rising (30) and a falling (32) modulation phase in the digital signal processor (26) and a subsequent evaluation pause (34,36,38), in order to determine the object frequencies (fu, fd) from the maxima contained in the spectra,
characterized
in that object tracks which describe the previous time response of the object frequencies, which have been stored over a number of measurement cycles, for a target object are formed separately on the basis of rising and falling modulation phases from said object frequencies,
in that estimated values (fve) for the object frequencies (fc) to be expected in the next measurement cycle are formed from the previous response of the object tracks,
in that, after calculation of an error from the object frequencies (fc) and from the estimated values (fve) obtained from the object tracks, the object frequency pairs which in each case have the lowest error are assigned to one another, and in that these pairs are used to calculate the correct values for the range (r) and relative speed (v) of the target object.

5. Method according to Claim 4, characterized in that the detection time for the samples of the mixed signals in each modulation phase is shorter than the duration of the modulation phase.

6. Method according to Claim 4, characterized in that the error is a function of the magnitude of the error between the distance and relative speed values which are obtained on the one hand by addition and subtraction of the object frequencies in the two modulation phases of a measurement cycle and on the other hand as a result of an evaluation of the object tracks.

7. Method according to Claim 4,
characterized
in that new estimated values are formed frcm previous estimated values in order to track target objects which have disappeared.

8. Method according to Claim 4,
characterized
in that a new object track having an estimated value is applied after updating all the already existing object tracks for each maximum which has not yet been assigned in a measurement cycle, in particular if the new measured value is in the range of the estimated value.

9. Method according to Claim 4,
characterized
in that each new object track is not released for the assignment process of object frequencies of the two modulation phases until after a predetermined number of measurement cycles.

## Revendications

1. Dispositif radar comprenant au moins une antenne (16, 18, 20), servant à émettre et recevoir des signaux radar, un générateur de signaux (26), servant à alimenter l'antenne (16, 18, 20), et des moyens de mélange et de filtrage (8, 22) servant à produire un signal de mélange, le processeur de signaux (26) recevant le signal de mélange et d'autres signaux de capteur, indiquant comme fréquences d'objet les fréquences de maxima présents dans le spectre du signal de mélange, séparément pour une phase de modulation croissante et une phase de modulation décroissante (30, 32), et calculant à partir des fréquences d'objet la distance et la vitesse relative d'un objet cible,
caractérisé
- en ce que, sur l'étendue de quelques cycles de mesure, les fréquences d'objet d'un objet cible sont mises en mémoire, séparément pour les phases de modulation croissante et décroissante,
- en ce qu'à partir des fréquences d'objet mises en mémoire, il est formé des pistes d'objet qui décrivent la variation présentée jusqu'à présent dans le temps par ces fréquences d'objet,
- en ce qu'à partir de la variation présentée jusqu'à présent par les pistes d'objet, il est formé des valeurs d'estimation (fve) pour les fréquences d'objet (fc) auxquelles on doit s'attendre au cycle suivant de mesure,
- en ce qu'après calcul d'une valeur d'écart à partir des fréquences d'objet (fc) et à partir des valeurs d'estimation (fve) obtenues au moyen des pistes d'objet, les fréquences de chaque paire de fréquences d'objet présentant la valeur d'erreur la plus faible sont chaque fois affectées l'une à l'autre et en ce qu'à partir de ces paires, les valeurs exactes sont calculées pour une distance (r) et une vitesse relative (v) de l'objet cible.

2. Dispositif radar suivant la revendication 1, caractérisé par un oscillateur (2), commandé en tension et relié à l'antenne par l'intermédiaire d'un coupleur directif (6) et un circulateur (10), et par un mélangeur (8) qui mélange une partie du signal d'émission aux signaux d'écho reçus en donnant un signal de mélange qui contient des différences de fréquence à partir desquelles la distance (r) et la vitesse relative (v) d'au moins un objet cible peuvent être déterminées et en ce qu'il est prévu, en tant que processeur de signaux, un processeur numériques de signaux (26) qui commande l'oscillateur (2) par l'intermédiaire d'un convertisseur numérique/analogique (4), qui reçoit des signaux de capteur et, par l'intermédiaire d'un convertisseur analogique/numérique (24), des valeurs d'estimation du signal de mélange, détermine et enregistre les fréquences de maxima se présentant dans le spectre du signal de mélange, séparément pour la phase de modulation croissante et la phase de modulation décroissante, et calcule à partir de celles-ci des valeurs d'estimation pour des fréquences d'objet du cycle de mesure suivant.

3. Dispositif radar suivant la revendication 1, caractérisé en ce qu'il est prévu, monté en aval du mélangeur (8), un filtre analogique (22) qui élimine du signal de mélange des composantes indésirables de courant continu à fréquence élevée et optimise le rapport signal/bruit et en ce qu'il est prévu un filtre fonctionnant essentiellement en passe-bas dépendant de la fréquence, notamment un filtre R⁴, qui est contenu dans le filtre analogique (22) ou est monté entre celui-ci et l'entrée du convertisseur analogique/numérique (24).

4. Procédé de fonctionnement d'un dispositif radar qui comprend au moins une antenne d'émission et de réception, comprend un générateur de signaux (26) qui alimente l'antenne (16, 18, 20), et comprend des moyens de mélange et de filtrage (8, 22) qui produisent un signal de mélange et envoient le signal de mélange au processeur de signaux (26), tandis que, dans des cycles successifs de mesure qui consistent en une phase de modulation croissante (30) et une phase de modulation décroissante (32) suivies d'un intervalle inter-impulsions (34, 36, 38) d'analyse, les valeurs numériques d'échantillonnage des signaux de mélange détectés et enregistrés dans chaque cycle de modulation pendant les deux phases de modulation sont soumises à une transformation accélérée de Fourier (FFT) dans le processeur numérique de signaux (26), afin de déterminer les fréquences d'objet (fu, fd) à partir des maxima contenus dans les spectres,
caractérisé
en ce qu'à partir des fréquences d'objet correspondant à un objet cible et mises en mémoire sur l'étendue de quelques cycles de mesure, il est formé, séparément pour des phases croissante et décroissante de modulation, des pistes d'objet qui décrivent la variation présentée jusqu'à présent dans le temps par les fréquences d'objet,
en ce qu'à partir de la variation présentée jusqu'à présent par les pistes d'objet, il est formé des valeurs d'estimation (fve) pour les fréquences d'objet (fc) auxquelles il faut s'attendre au cycle suivant de mesure,
en ce qu'après calcul d'une valeur d'erreur à partir des fréquences d'objet (fc) et à partir des valeurs d'estimation (fve) obtenues au moyen des pistes d'objet, les fréquences de chaque paire de fréquences d'objet présentant la valeur d'erreur la plus faible sont affectées chaque fois l'une à l'autre et en ce qu'à partir de ces paires, les valeurs exactes sont calculées pour une distance (r) et une vitesse relative (v) de l'objet cible.

5. Procédé suivant la revendication 4, caractérisé en ce que la durée de détection prévue pour les valeurs d'échantillonnage des signaux de mélange de chaque phase de modulation est inférieure à la durée de la phase de modulation.

6. Procédé suivant la revendication 4, caractérisé en ce que la valeur d'erreur est une fonction des valeurs de l'erreur existant entre les valeur de distance et les valeurs de vitesse relative, lesquelles sont obtenues d'une part par addition et soustraction des fréquences d'objet dans les deux phases de modulation d'un cycle de mesure et d'autre part comme résultat d'une analyse des pistes d'objet.

7. Procédé suivant la revendication 4, caractérisé en ce que, pour la poursuite d'objets cibles qui fuient, de nouvelles valeurs d'estimation sont formées à partir de valeurs précédentes d'estimation.

8. Procédé suivant la revendication 4, caractérisé en ce qu'après actualisation de toutes les pistes d'objet déjà existantes, pour chaque maximum non encore affecté d'un cycle de mesure, une nouvelle piste d'objet est établie avec une valeur d'estimation, notamment lorsque la nouvelle valeur de mesure est située dans le domaine de la valeur d'estimation.

9. Procédé suivant la revendication 4, caractérisé en ce que chaque nouvelle piste d'objet n'est libérée, pour l'opération d'affectation de fréquences d'objet des deux phases de modulation, qu'après un nombre préfixé de cycles de mesure.
